# EUROPEAN PATENT SPECIFICATION

(11) **EP 3 591 931 B1**
(45) Date of publication and mention of the grant of the patent: **07.06.2023**
(21) Application number: 18821116.3
(22) Date of filing: 14.06.2018
(51) Int. Cl.: H04L 9/40, H04L 67/10, G06F 21/64, H04L 9/00, G06F 21/31, H04L 9/32

(54) **AUTHENTICATION METHOD, AND AUTHENTICATION DATA PROCESSING METHOD AND DEVICE BASED ON BLOCKCHAIN**
AUTHENTIFIZIERUNGSVERFAHREN UND AUTHENTIFIKATIONSDATENVERARBEITUNGSVERFAHREN UND VORRICHTUNG AUF BASIS EINER BLOCKCHAIN
PROCÉDÉ D'AUTHENTIFICATION, ET PROCÉDÉ ET DISPOSITIF DE TRAITEMENT DE DONNÉES D'AUTHENTIFICATION BASÉS SUR UNE CHAÎNE DE BLOCS

(30) Priority: 19.06.2017 CN 201710465995
(43) Date of publication of application: 08.01.2020
(73) Proprietor: Advanced New Technologies Co., Ltd., George Town, Grand Cayman KY1-9008 (KY)
(72) Inventor: LI, Kejia, Hangzhou Zhejiang 311121 (CN)
(74) Representative: Finnegan Europe LLP
(86) International application number: PCT/CN2018/091198
(87) International publication number: WO 2018/233536

(56) References cited:
- CN-A- 105 701 372
- CN-A- 106 789 911
- CN-A- 107 257 340
- US-A1- 2016 330 027
- US-A1- 2016 330 035
- US-A1- 2017 078 299

## Description

### Technical Field

The present application relates to the field of Internet information processing technologies and computer technologies, and more particularly to an authentication method and a blockchain-based authentication data processing method and device.

### Technical Background

With the development of the Internet industry, more and more industries use the Internet to provide services for users. Identity authentication is an important step in the process of providing services through the Internet.

A server corresponding to an Internet service platform providing services generally authenticates the identity of a user requesting a service by using the following methods:

### First method:

A data link is established in advance between a server (hereinafter referred to as a first server) corresponding to the Internet service platform and a server (hereinafter referred to as a second server) corresponding to an identity management platform (for example, a public security agency or other state agencies);
when receiving a service request sent from a user, the first server generates an authentication request according to identity information of the user included in the service request (where the identity information may include information such as an identity identifier), and sends the authentication request to the second server via the data link established in advance;
the second server receives the authentication request sent from the first server, authenticates the identity information included in the authentication request, and sends the authentication result to the first server;
when receiving the authentication result, the first server completes the identity authentication on the user according to the authentication result.

However, because various Internet service platforms can acquire users' identity information, leakage of users' identity information may occur.

### Second method:

To prevent leakage of identity information, a user uses the identity information to apply to the second server for an electronic identity (eID). In this way, when requesting a service, the user may send the eID to the first server, and the first server can implement identity authentication on the user by using the first method.

However, because the identity authentication performed by each Internet service platform on the user requires the involvement of the second server, the second server needs to process a large number of authentication requests, leading to low efficiency in processing authentication requests and a longer time required for the Internet service platform to process the requested service. As a result, the user experience of the service provided by the Internet service platform is poor.

US 2017/078299 A1 discloses a system that is operable to restrict account access points from accessing accounts in case of loss or theft of the access point, without disabling the account, thus conserving computational resources and bandwidth consumed by disabling an account, creating a new account, and granting account access points access to the new account, and by correcting fraudulent transactions.

US 2016/330027 A1 discloses a method that enables writing data to a block chain database, which is nonrewritable and permanently maintains a record without compromise. The method enables utilizing use of verification to be simply facilitated by using verifying infrastructure, programs code, and applications so as to ensure that the verification is secure.

### Summary of the Invention

In view of this, embodiments of the present application solve the problem of low processing efficiency of the identity authentication methods in the prior art. The invention is defined by a method according to claim 1 and a device according to claim 10. Further embodiments are set out in the dependent claims.

The at least one technical solution adopted by the embodiments of the present application can achieve the following beneficial effects:
With the technical solution provided by the present application, after an authentication request sent from a user is received, authentication data associated with an identity identifier of the user is acquired from a blockchain network, and identity authentication is performed on the user according to the authentication data. In this way, based on the features such as decentralization and anti-tampering of the blockchain network, a mapping relationship between identity identifiers of different users and authentication data is stored in advance in a blockchain node of the blockchain network. When providing a service for the user, an Internet service platform can perform identity authentication on the user based on the authentication data stored in the blockchain network, to avoid the problem of low efficiency in processing authentication requests due to the fact that there are a large number of identity authentication requests to be processed by the identity management platform, thus improving the processing efficiency of identity authentication. As the authentication data can be shared among different Internet service platforms by means of the blockchain network, the user does not need to submit identity information when registering with or logging in to a new service platform each time, and the misuse of the identity information by an imposter due to leakage of the identity information can be effectively prevented, thus effectively improving the accuracy of identity authentication.

### Brief Description of the Drawings

The accompanying drawings described herein are provided for further comprehension of the present application and constitute a part of the present application. The schematic embodiments of the present application and the description thereof are used to illustrate the present application, but do not constitute any improper limitation to the present application. In the accompanying drawings:
FIG. 1 is a schematic flowchart of a blockchain-based authentication data processing method according to an embodiment of the present application;
FIG. 2 is a schematic structural diagram of authentication data in a blockchain network according to an embodiment of the present application;
FIG. 3 is a schematic flowchart of an authentication method according to an embodiment of the present application;
FIG. 4 is a schematic flowchart of an authentication method according to an embodiment of the present application;
FIG. 5 is a schematic flowchart of an authentication method according to an embodiment of the present application;
FIG. 6 is a structural diagram of an identity authentication system according to an embodiment of the present application;
FIG. 7 is a schematic structural diagram of an authentication device according to an embodiment of the present application; and
FIG. 8 is a schematic structural diagram of a blockchain-based authentication data processing device according to an embodiment of the present application.

### Detailed Description

To achieve the objectives of the present application, the embodiments of the present application provide an authentication method and a blockchain-based authentication data processing method and device. After an authentication request sent from a user is received, authentication data associated with an identity identifier of the user is acquired from a blockchain network, and identity authentication is performed on the user according to the authentication data.

In this way, based on the features such as decentralization and anti-tampering of the blockchain network, a mapping relationship between identity identifiers of different users and authentication data is stored in advance in a blockchain node of the blockchain network. When providing a service for the user, an Internet service platform can perform identity authentication on the user based on the authentication data stored in the blockchain network, to avoid the problem of low efficiency in processing authentication requests due to the fact that there are a large number of identity authentication requests to be processed by the identity management platform, thus improving the processing efficiency of identity authentication. As the authentication data can be shared among different Internet service platforms by means of the blockchain network, the user does not need to submit identity information when registering with or logging in to a new service platform each time, and the misuse of the identity information by an imposter due to leakage of the identity information can be effectively prevented, thus effectively improving the accuracy of identity authentication.

It should be noted that, for the expression "a mapping relationship between identity identifiers of different users and authentication data is stored in advance in a blockchain node of the blockchain network" in the embodiments of the present application, the mapping relationship may be stored by a server corresponding to an identity management platform when the user registers with the server corresponding to the identity management platform, or may be stored by an Internet service platform providing services when the user requests a service from the Internet service platform, which is not particularly limited herein.

To make the objectives, the technical solutions, and the advantages of the present application clearer, the technical solutions of the present application will be described clearly and thoroughly below with reference to specific embodiments of the present application and corresponding drawings. Apparently, the described embodiments are only some rather than all embodiments of the present application. On the basis of the embodiments in the present application, all other embodiments acquired by those of ordinary skill in the art without creative efforts shall belong to the protection scope of the present application.

The technical solutions provided by the embodiments of the present application are described in detail below with reference to the accompanying drawings.

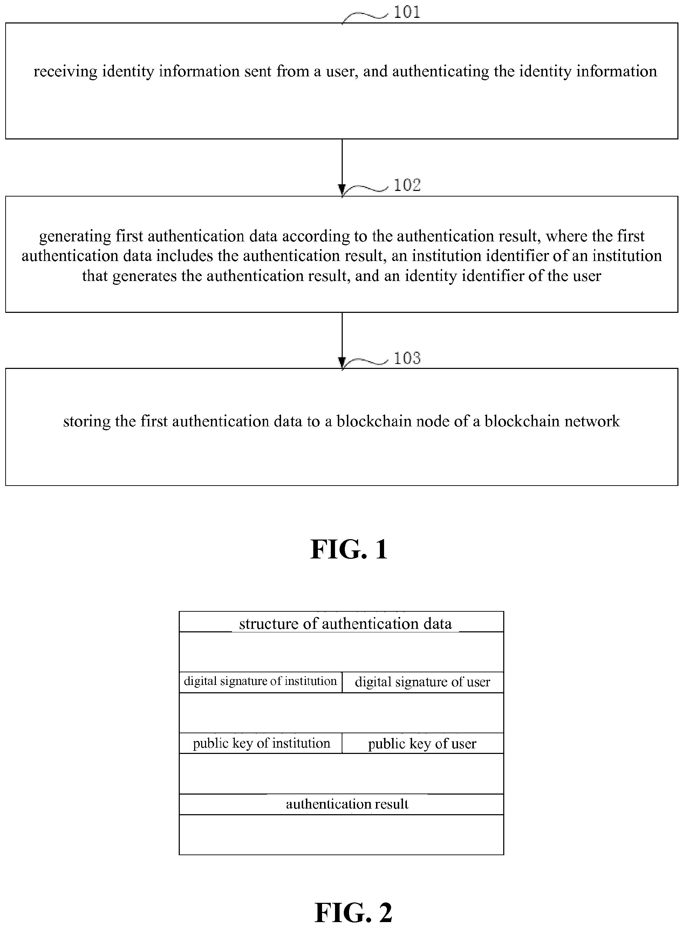

FIG. 1 is a schematic flowchart of a blockchain-based authentication data processing method according to an embodiment of the present application. The method may be described as follows. The embodiment of the present application may be executed by a server corresponding to an identity management platform.

Step 101: receiving identity information sent from a user, and authenticating the identity information.

In the embodiments of the present application, the server corresponding to the identity management platform may be a household registration management server of a public security agency or may be a server corresponding to a financial institution. That is to say, the identity authentication performed by the server corresponding to the identity management platform mentioned in the embodiments of the present application has a high credibility level.

Specifically, the server corresponding to the identity management platform may receive the identity information sent from the user during registration of the user or may receive the identity information sent from the user when the user initiates a service (for example, a deposit service, a withdrawal service, a transfer service, etc.). In this case, the server corresponding to the identity management platform needs to authenticate the received identity information.

Herein, the identity information includes various identity feature information such as the name, age, identity card number, and bank card number of the user. The server corresponding to the identity management platform may authenticate the received identity information based on stored identity feature information of the user, to determine whether the identity information is valid.

For example, the server corresponding to the identity management platform is a server corresponding to a financial institution, and the user provides the identity information to the server corresponding to the financial institution when opening an account. In this case, the server corresponding to the financial institution may authenticate the identity information provided by the user. When determining that the identity information of the user is valid, bank account information is assigned to the user, and a mapping relationship is established between bank account information of the user (for example, bank card number) and identity information of the user.

It should be noted that, in the embodiments of the present application, if determining that the identity information is valid after authenticating the identity information, the server corresponding to the identity management platform may further generate an identity identifier for the user. The identity identifier can uniquely determine the user. Herein, the identity identifier may be an eID, or may be in other forms, which is not particularly limited herein.

Step 102: generating first authentication data according to the authentication result, where the first authentication data includes the authentication result, an institution identifier of an institution that generates the authentication result, and an identity identifier of the user.

In the embodiments of the present application, the authentication result may be authentication being successful, indicating that the identity information of the user is valid; or may be authentication being failed, indicating that the identity information of the user is abnormal or invalid.

Regardless of the authentication result, the first authentication data herein may be generated based on the obtained authentication result. Herein, "first," "second," and "third" in "first authentication data" and the following "second authentication data" and "third authentication data" do not have special meanings and are only used for representing different authentication data.

Specifically, when the verification result indicates that the identity information is valid, the first authentication data is obtained according to the authentication result, the institution identifier of the institution that generates the authentication result, and the identity identifier of the user. That is to say, if subsequently acquiring the first authentication data, the server corresponding to the Internet service platform may determine according to the first authentication data that the identity information of the user is valid, thus effectively improving the processing efficiency of authentication.

When the authentication result indicates that the identity information is abnormal or invalid, third authentication data may be obtained according to the authentication result, the institution identifier of the institution that generates the authentication result, and the identity identifier of the user.

In the embodiments of the present application, an authentication level may be determined for the server corresponding to the identity management platform, that is, authentication results determined by servers corresponding to identity management platforms having different authentication levels correspond to different credibility levels. The higher the authentication level is, the higher the credibility level corresponding to the determined authentication result is; conversely, the lower the authentication level is, the lower the credibility level corresponding to the determined authentication result is. Because the authentication data includes the institution identifier of the institution that generates the authentication result, the credibility level of the authentication result generated by the institution identifier may be determined according to the mapping relationship between the institution identifier and the authentication level, thus effectively ensuring the accuracy of identity authentication.

Step 103: storing the first authentication data to a blockchain node of a blockchain network.

In the embodiments of the present application, the server corresponding to the identity management platform may serve as a blockchain node in the blockchain network or may serve as a device independent of the blockchain network, which is not particularly limited herein.

If the server corresponding to the identity management platform is a blockchain node in the blockchain network, the server corresponding to the identity management platform, after obtaining authentication data (for example, the first authentication data or the third authentication data), may broadcast the authentication data to other blockchain nodes in the blockchain network, so that the other blockchain nodes perform consensus processing on the authentication data. When the consensus processing result indicates that consensus authentication is passed, the server corresponding to the identity management platform stores the first authentication data to a newly generated block, and stores the block to a blockchain node of the blockchain network.

If the server corresponding to the identity management platform is a device independent of the blockchain network, the server corresponding to the identity management platform, after obtaining authentication data (for example, the first authentication data or the third authentication data), may send the authentication data to any blockchain node in the blockchain network. The blockchain node broadcasts the authentication data to other blockchain nodes in the blockchain network, so that the other blockchain nodes perform consensus processing on the authentication data. When the consensus processing result indicates that consensus authentication is passed, the blockchain node stores the first authentication data to a newly generated block, and stores the block to a blockchain node of the blockchain network.

To ensure security of the identity information, in the embodiments of the present application, the authentication result may be stored in the blockchain network, and the identity information may be stored in an identity information database, to prevent leakage of the identity information. Herein, the identity information database is not located in the blockchain network and may be stored in the server corresponding to the identity management platform.

Specifically, a mapping relationship is established between identity identifiers of the users and identity information of the users; and the identity information of the user is stored to an identity information database according to the mapping relationship.

In the embodiments of the present application, because the state of some identity feature information in the identity information of the user may change due to some external factors, for example, the state of the identity card number of the user changes from a normal state to a lost state due to the loss of the identity card of the user, and then the server corresponding to the identity management platform generates different authentication data depending on different situations, to ensure that the authentication result is consistent with the actual situation of the identity information of the user.

Specifically, a loss report or unregistration request sent from the user is received, where the loss report or unregistration request includes the identity identifier of the user;
it is determined according to the loss report or unregistration request that the identity information of the user is in an abnormal state;
second authentication data is generated according to the identity information of the user being in an abnormal state, the institution identifier of the institution that generates the authentication result, and the identity identifier of the user; and
the second authentication data is stored to a blockchain node of the blockchain network.

That is to say, once receiving a change request sent from the user (including a loss report request, an unregistration request, a resume request, etc.), the server corresponding to the identity management platform determines a current status of the identity information of the user according to the change request, and then generates the second authentication data according to the current status of the identity information of the user, the institution identifier of the institution that generates the authentication result, and the identity identifier of the user.

Similarly, when the second authentication data is stored to a blockchain node of the blockchain network, consensus processing on the second authentication data may be initiated. The manner of consensus processing is the same as or similar to that of consensus processing on the first authentication data. Reference may be made to the contents described above, and the details will not be repeatedly described herein.

It should be noted that the servers corresponding to the identity management platforms described in the embodiments of the present application may serve as blockchain nodes in a consortium blockchain, and authentication data generated by the servers can be used by other servers that accept the consortium blockchain, thus effectively improving the processing efficiency of identity authentication.

In the embodiments of the present application, to ensure the security of the authentication data stored in the blockchain, the authentication data may be stored according to a preset format.

FIG. 2 is a schematic structural diagram of authentication data in a blockchain network according to an embodiment of the present application.

As can be seen from FIG. 2, the institution identifier of the institution that generates the authentication result may be represented by using a public key and a digital signature. That is, public and private key pairs may be set for different institutions in advance. In this way, a digest corresponding to the institution identifier may be encrypted by using the private key to obtain the digital signature, and the public key and the digital signature are used as institution information of the institution generating the authentication result in the authentication data.

The identity identifier of the user may also be represented by using a public key and a digital signature. That is, a public and private key pair may be set for the user in advance. After the identity information of the user is authenticated, a digest corresponding to the identity information of the user is encrypted by using the private key to obtain the digital signature, and the public key and the digital signature are used as the identity identifier of the user in the authentication data.

That is to say, the authentication data stored in a blockchain node of the blockchain network may be stored in a form shown in Table 1:

**Table 1**

| Time | User identifier | | Institution identifier | | Authentication result |
|---|---|---|---|---|---|
| T1 | Public key | Digital signature | Public key | Digital signature | Successful/Failed |

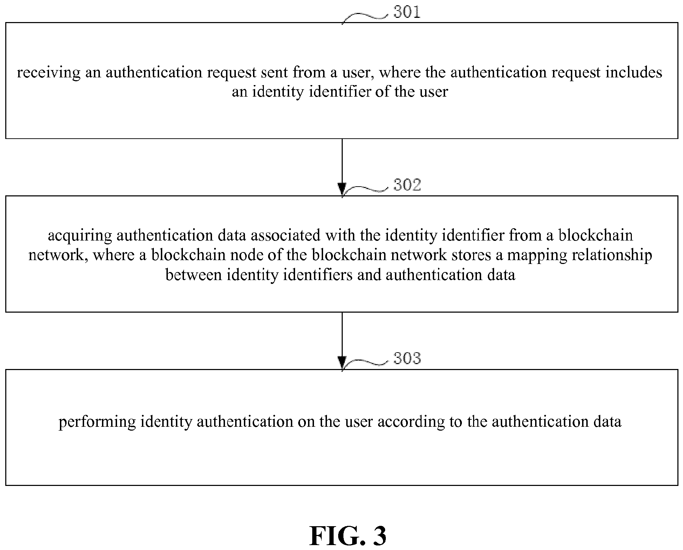

FIG. 3 is a schematic flowchart of an authentication method according to an embodiment of the present application. The method is described as follows. The authentication method may be executed by a server corresponding to an Internet service platform providing services, or an application client terminal running as an APP on a terminal device, which is not particularly limited herein.

Step 301: receiving an authentication request sent from a user, where the authentication request includes an identity identifier of the user.

In the embodiments of the present application, the authentication request sent from the user may be sent by the user when sending a service processing request or may be sent by the user when logging in to an Internet service platform, which is not particularly limited herein.

Herein, the identity identifier can uniquely identify the user, and may be a login account of the user, may be an eID, or may be in other forms, which is not particularly limited herein.

Step 302: acquiring authentication data associated with the identity identifier from a blockchain network, where a blockchain node of the blockchain network stores a mapping relationship between identity identifiers and authentication data.

In the embodiments of the present application, because the blockchain node of the blockchain network stores the mapping relationship between identity identifiers and authentication data, when the authentication request sent from the user is received, the authentication data associated with the identity identifier may be acquired from the blockchain network based on the identity identifier of the user included in the authentication request and the mapping relationship stored in each blockchain node of the blockchain network.

Preferably, before the authentication data associated with the identity identifier is acquired, if the authentication request further includes a public key and a digital signature, it is verified whether the digital signature is valid by using the public key, where the digital signature is obtained by signing with a private key in the public and private key pair. The signature authentication can determine whether the user sending the authentication request is the user for which the public and private key pair is set, and thus ensure the necessity of implementing subsequent processes.

If the verification result indicates that the digital signature is invalid, the authentication process is ended.

If the verification result indicates that the digital signature is valid, the authentication data associated with the identity identifier is acquired from the blockchain network.

Because each blockchain node of the blockchain network stores a plurality of pieces of authentication data, the embodiment of the present application may sift out the authentication data including the identity identifier from the blockchain network based on the identity identifier included in the authentication request and determine the obtained authentication data as the authentication data associated with the identity identifier.

Further, if more than one piece of authentication data is obtained after the sifting, authentication data satisfying a preset condition is determined in the obtained authentication data, and the determined authentication data is determined as the authentication data associated with the identity identifier.

In the embodiments of the present application, the preset condition includes at least one or more of the following:
a generation time of the authentication data satisfies a preset time condition;
an institution identifier included in the authentication data satisfies a preset issuing institution's institution identifier; and
a service type included in the authentication data is the same as a service type of a service initiated by the user.

Specifically, if the preset condition is that the generation time of the authentication data satisfies the preset time condition, generation times of the pieces of authentication data obtained after the sifting are determined, the authentication data corresponding to the generation time satisfying the preset time condition is determined according to the generation times of the pieces of authentication data, and the determined authentication data is determined as the authentication data associated with the identity identifier.

Assuming that the preset time condition is that a time difference between the generation time of the authentication data and a current time is the smallest, after the generation times of the pieces of authentication data obtained after the sifting are determined, the pieces of authentication data are sorted in chronological order of the generation times, then the authentication data corresponding to the generation time that is closest to the current time is selected according to the sorting result, and the determined authentication data is determined as the authentication data associated with the identity identifier.

It should be noted that the generation time of the authentication data may be the time at which the authentication result is generated, may be the time at which the authentication data is stored to a blockchain node of the blockchain network, or may be the time at which the blockchain node of the blockchain network accepts the authentication data, which is not particularly limited herein.

If the preset condition is that the institution identifier included in the authentication data satisfies a preset issuing institution's institution identifier, institution identifiers corresponding to the pieces of authentication data obtained after the sifting are determined, authentication data in which the institution identifiers satisfy the preset issuing institution's institution identifier is determined according to the institution identifiers corresponding to the pieces of authentication data, and the determined authentication data is determined as the authentication data associated with the identity identifier.

Assuming that the preset issuing institution's institution identifier is 10000, after the institution identifiers corresponding to the pieces of authentication data obtained after the sifting are determined, the authentication data in which the institution identifiers are 10000 is determined as the authentication data associated with the identity identifier.

It should be noted that the institution identifier herein may be a character string or may be a public key and a digital signature. If the institution identifier is a public key and a digital signature, public keys of institutions corresponding to the pieces of authentication data obtained after the sifting are determined, authentication data in which the public keys satisfy the preset issuing institution's public key is determined according to the public keys of the institutions corresponding to the pieces of authentication data, and the determined authentication data is determined as the authentication data associated with the identity identifier.

It should be noted that, in the embodiments of the present application, there may be more than one piece of authentication data in which the institution identifiers satisfy the preset issuing institution's institution identifier. If the number is more than one, authentication data including an institution identifier corresponding to an institution having the highest authentication level may be preferentially acquired according to authentication levels of the issuing institutions. If the authentication data including the institution identifier corresponding to the institution having the highest authentication level is not found, authentication data including an institution identifier corresponding to an institution having the second highest authentication level is acquired. In this way, the authenticity and validity of the authentication data can be ensured, thus ensuring the accuracy of the authentication result.

If the preset condition is that the service type included in the authentication data is the same as the service type of the service initiated by the user, the service type of the service initiated by the user is determined, service types included in the pieces of authentication data obtained after the sifting are determined, authentication data including a service type that is the same as the service type of the service initiated by the user is determined according to the service types included in the pieces of authentication data, and the determined authentication data is determined as the authentication data associated with the identity identifier.

Because services of the same service type have similar requirements on the identity authentication of the user, the authentication of the identity of the user according to authentication data generated by other Internet service platforms providing same services can ensure the accuracy of the authentication result.

It should be noted that, during the screening of the authentication data, the three preset conditions described above may be used either separately or in combination, which is not particularly limited herein. In addition to the above three preset conditions, other preset conditions may also be set as required, which will not be enumerated herein.

Step 303: performing identity authentication on the user according to the authentication data.

In the embodiments of the present application, determining a current authentication state of the identity identifier according to the authentication data; and if the identity identifier is in an abnormal state and/or an authentication failed state, determining that the identity authentication on the user is not successful; otherwise, determining that the identity authentication on the user is successful.

The abnormal state described herein may be a lost state or may be an unregistered state, which is not particularly limited herein.

In the determining of the current authentication state of the identity identifier according to the authentication data, once it is determined that the authentication data of the identity identifier has experienced an abnormal state, it needs to be further determined whether the authentication status of the identity identifier has recovered from the abnormal state. If no, it is determined that the identity identifier is in an abnormal state; if yes, it is determined that the identity identifier is in a normal state.

For example, when the identity identifier is lost or leaked, the user sends a change request to the server corresponding to the identity management platform, to request to report loss of the identity identifier or update the identity identifier; then the server corresponding to the identity management platform sends loss report or update information to the blockchain network through the identity management platform, and uploads the loss report or update information to the blockchain after consensus authentication is successful; or,
the user directly sends an unregistration request to an identity management institution, and the server corresponding to the identity management platform uploads unregistration information to the blockchain through the identity management platform.

The authentication method provided in the embodiments of the present application integrates the blockchain technology, not only making use of the advantages of the blockchain, but also achieving the following advantages: First, the entire authentication process does not involve the identity information of the user, and the authentication process is completed by using only the identity identifier, thus preventing the identity information from being acquired by the blockchain node or entities other than the blockchain node, and enhancing the security of the identity information. Second, in practical applications, any user can learn the authentication status of his/her identity identifier by using a user client terminal or by submitting an application to a related service institution, to determine whether the identity identifier is misused by an imposter, thus achieving the obj ective of monitoring and taking counter measures as soon as possible once finding that the identity identifier is misused by an imposter.

In addition, the authentication process may be executed by a blockchain node or another entity irrelevant to the blockchain node. The authentication data stored in the blockchain can be written or updated only by the blockchain node. Therefore, when the user or a regulatory authority finds that the identity identifier is misused by an imposter, tracking can be performed.

With the technical solution provided in the embodiments of the present application, after an authentication request sent from a user is received, authentication data associated with an identity identifier of the user is acquired from a blockchain network, and identity authentication is performed on the user according to the authentication data. In this way, based on the features such as decentralization and anti-tampering of the blockchain network, a mapping relationship between identity identifiers of different users and authentication data is stored in advance in a blockchain node of the blockchain network. When providing a service for the user, an Internet service platform can perform identity authentication on the user based on the authentication data stored in the blockchain network, to avoid the problem of low efficiency in processing authentication requests due to the fact that there are a large number of identity authentication requests to be processed by the identity management platform, thus improving the processing efficiency of identity authentication. As the authentication data can be shared among different Internet service platforms by means of the blockchain network, the user does not need to submit identity information when registering with or logging in to a new service platform each time, and the misuse of the identity information by an imposter due to leakage of the identity information can be effectively prevented, thus effectively improving the accuracy of identity authentication.

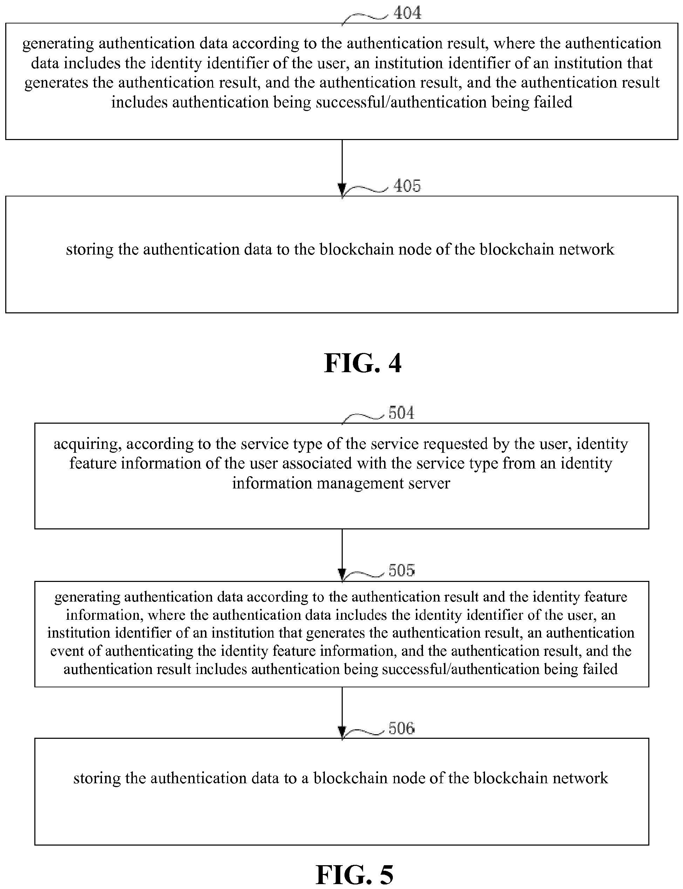

FIG. 4 is a schematic flowchart of an authentication method according to an embodiment of the present application. The method may be described as follows. The embodiment of the present application implements the following steps on the basis of FIG. 3:
Step 404: generating authentication data according to the authentication result, where the authentication data includes the identity identifier of the user, an institution identifier of an institution that generates the authentication result, and the authentication result, and the authentication result includes authentication being successful/authentication being failed; and
Step 405: storing the authentication data to a blockchain node of the blockchain network.

Preferably, before the storing the authentication data to a blockchain node of the blockchain network, the method further includes:
sending the authentication data to the blockchain network, so that the blockchain network performs consensus processing on the authentication data; and
if the consensus processing result indicates that a consensus is reached, storing the authentication data to a blockchain node of the blockchain network.

FIG. 5 is a schematic flowchart of an authentication method according to an embodiment of the present application. The method may be described as follows. The embodiment of the present application implements the following steps on the basis of FIG. 3:
Step 504: acquiring, according to the service type of the service requested by the user, identity feature information of the user associated with the service type from an identity information management server.

In practical applications, some service procedures require the use of the identity information of the user. For example, a game service platform may acquire user identity information such as gender and age of the user, and a community management platform may acquire user identity information such as address, registered permanent residence, phone number, and family members of the user.

In this case, the server corresponding to the Internet service platform may acquire the identity feature information of the user associated with the service type from the identity information management server and authenticate the acquired identity feature information. Herein, the identity feature information includes gender, age, user's address, registered permanent residence, phone number, family members, and the like.

Specifically, first, the server corresponding to the Internet service platform sends a user identity information acquiring request to the identity information management server.

After receiving the user identity information acquiring request, the identity information management server checks whether the server corresponding to the Internet service platform has permission to acquire the identity information of the user, for example, checks whether the server corresponding to the Internet service platform and the user have signed a valid authorization agreement and whether the current user identity information acquiring request is authorized by the user.

It should be noted that there may be a plurality of identity information management servers herein. For example, the identity feature information "phone number" and the identity feature information "age" may be stored in different identity information management servers.

Then, the server corresponding to the Internet service platform receives the identity feature information returned from the identity information management server.

Step 505: generating authentication data according to the authentication result and the identity feature information, where the authentication data includes the identity identifier of the user, an institution identifier of an institution that generates the authentication result, an authentication event of authenticating the identity feature information, and the authentication result, and the authentication result includes authentication being successful/authentication being failed.

It should be noted that "authentication event of authenticating the identity feature information" is mentioned herein for the purpose of describing that one or more pieces of (acquired) identity feature information of the user are authenticated. It should be noted that the authentication data does not include specific contents of the identity feature information, thus ensuring the security of the identity feature information and reducing the risk of leakage.

Step 506: storing the authentication data to a blockchain node of the blockchain network.

Preferably, before the storing the authentication data to a blockchain node of the blockchain network, the method further includes:
sending the authentication data to the blockchain network, so that the blockchain network performs consensus processing on the authentication data; and
if the consensus processing result indicates that a consensus is reached, storing the authentication data to a blockchain node of the blockchain network.

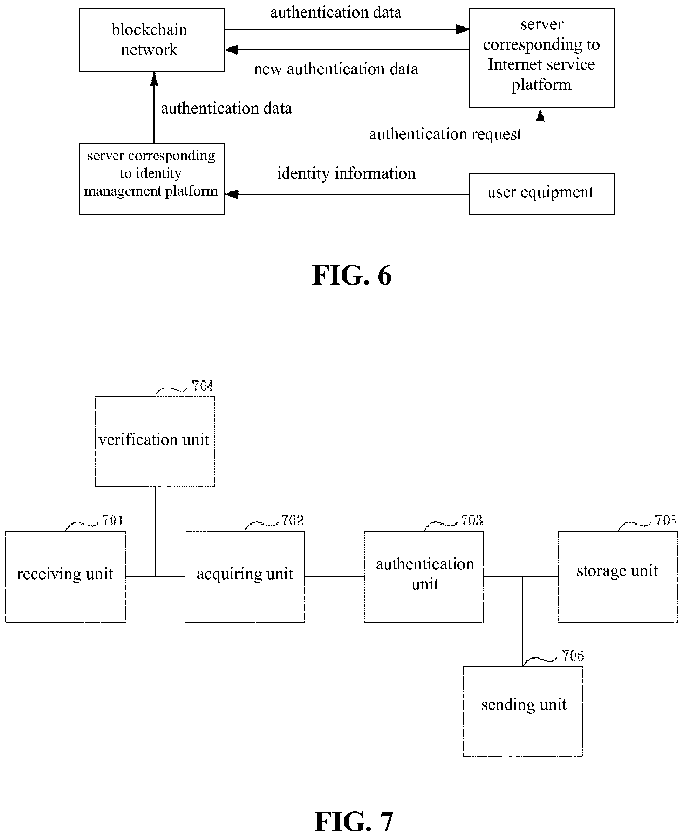

FIG. 6 is a schematic structural diagram of an identity authentication system according to an embodiment of the present application.

As can be seen from FIG. 6, the identity authentication system provided in the embodiments of the present application includes a blockchain network, a server corresponding to an identity management platform, a server corresponding to an Internet service platform, and user equipment.

The user uses the user equipment to send identity information to the server corresponding to the identity management platform. The server corresponding to the identity management platform authenticates the identity of the user, and stores authentication data including an authentication result to the blockchain network.

When providing a service for the user, the server corresponding to the Internet service platform may acquire the authentication data from the blockchain network, and thus implement the identity authentication on the user. In addition, the generated authentication result may also be stored to the blockchain network, so that the authentication result can be shared with other Internet service platforms.

FIG. 7 is a schematic structural diagram of an authentication device according to an embodiment of the present application. As shown below, the authentication device includes a receiving unit 701, an acquiring unit 702, and an authentication unit 703, where:
the receiving unit 701 is configured to receive an authentication request sent from a user, where the authentication request includes an identity identifier of the user;
the acquiring unit 702 is configured to acquire authentication data associated with the identity identifier from a blockchain network, where a blockchain node of the blockchain network stores a mapping relationship between identity identifiers and authentication data; and
the authentication unit 703 is configured to perform identity authentication on the user according to the authentication data.

In another embodiment of the present application, the authentication device further includes a verification unit 704, where:
the verification unit 704 is configured to, if the authentication request further includes a public key and a digital signature, verify whether the digital signature is valid by using the public key, where the digital signature is obtained by signing with a private key in the public and private key pair; and
the acquiring unit 702 acquiring authentication data associated with the identity identifier from a blockchain network includes:
   if the verification result indicates that the digital signature is valid, acquiring the authentication data associated with the identity identifier from the blockchain network.

In another embodiment of the present application, the acquiring unit 702 acquiring authentication data associated with the identity identifier from a blockchain network includes:
sifting out the authentication data including the identity identifier from the blockchain network, and determining the obtained authentication data as the authentication data associated with the identity identifier.

In another embodiment of the present application, the acquiring unit 702 is configured to, if more than one piece of authentication data is obtained after the sifting, determine authentication data satisfying a preset condition in the obtained authentication data, and determine the determined authentication data as the authentication data associated with the identity identifier.

In another embodiment of the present application, the preset condition includes at least one or more of the following:
a generation time of the authentication data satisfies a preset time condition;
an institution identifier included in the authentication data satisfies a preset issuing institution's institution identifier; and
a service type included in the authentication data is the same as a service type of a service initiated by the user.

In another embodiment of the present application, the authentication unit 703 performing identity authentication on the user according to the authentication data includes:
determining a current authentication state of the identity identifier according to the authentication data; and
if the identity identifier is in an abnormal state and/or an authentication failed state, determining that the identity authentication on the user is not successful; otherwise, determining that the identity authentication on the user is successful.

In another embodiment of the present application, the authentication device further includes a storage unit 705, where:
the storage unit 705 is configured to generate authentication data according to the authentication result, where the authentication data includes the identity identifier of the user, an institution identifier of an institution that generates the authentication result, and the authentication result, and the authentication result includes authentication being successful/authentication being failed; and
store the authentication data to a blockchain node of the blockchain network

In another embodiment of the present application, the authentication device further includes a sending unit 706, where:
the sending unit 706 is configured to, before the authentication data is stored to a blockchain node of the blockchain network, send the authentication data to the blockchain network, so that the blockchain network performs consensus processing on the authentication data; and
the storage unit 705 storing the authentication data to a blockchain node of the blockchain network includes:
   if the consensus processing result indicates that a consensus is reached, storing the authentication data to a blockchain node of the blockchain network.

In another embodiment of the present application, the acquiring unit 702 is configured to, after it is determined that the identity authentication on the user is successful, acquire, according to the service type of the service requested by the user, identity feature information of the user associated with the service type from an identity information management server; and
the storage unit 705 is configured to generate authentication data according to the authentication result and the identity feature information, where the authentication data includes the identity identifier of the user, an institution identifier of an institution that generates the authentication result, an authentication event of authenticating the identity feature information, and the authentication result, and the authentication result includes authentication being successful/authentication being failed; and
store the authentication data to a blockchain node of the blockchain network.

It should be noted that the authentication device provided in the embodiments of the present application may be implemented through software or hardware, which is not particularly limited herein. After an authentication request sent from a user is received, the authentication device acquires authentication data associated with an identity identifier of the user from a blockchain network and performs identity authentication on the user according to the authentication data. In this way, based on the features such as decentralization and anti-tampering of the blockchain network, a mapping relationship between identity identifiers of different users and authentication data is stored in advance in a blockchain node of the blockchain network. When providing a service for the user, an Internet service platform can perform identity authentication on the user based on the authentication data stored in the blockchain network, to avoid the problem of low efficiency in processing authentication requests due to the fact that there are a large number of identity authentication requests to be processed by the identity management platform, thus improving the processing efficiency of identity authentication. As the authentication data can be shared among different Internet service platforms by means of the blockchain network, the user does not need to submit identity information when registering with or logging in to a new service platform each time, and the misuse of the identity information by an imposter due to leakage of the identity information can be effectively prevented, thus effectively improving the accuracy of identity authentication.

Based on the same concept of the invention, the embodiments of the present application further provide an authentication device, including at least one memory and at least one processor, where the at least one memory stores a program and the device is configured to execute the following steps by the at least one processor:
receiving an authentication request sent from a user, where the authentication request includes an identity identifier of the user;
acquiring authentication data associated with the identity identifier from a blockchain network, where a blockchain node of the blockchain network stores a mapping relationship between identity identifiers and authentication data; and
performing identity authentication on the user according to the authentication data.

For specific implementations, reference can be made to the contents described in the foregoing embodiments, and the details will not be repeatedly described herein.

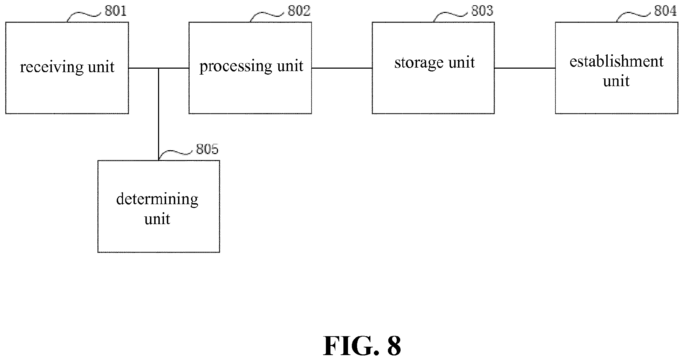

FIG. 8 is a schematic structural diagram of a blockchain-based authentication data processing device according to an embodiment of the present application. The authentication data processing device includes a receiving unit 801, a processing unit 802, and a storage unit 803, where:
the receiving unit 801 is configured to receive identity information sent from a user, and authenticate the identity information;
the processing unit 802 is configured to generate first authentication data according to the authentication result, where the first authentication data includes the authentication result, an institution identifier of an institution that generates the authentication result, and an identity identifier of the user; and
the storage unit 803 is configured to store the first authentication data to a blockchain node of a blockchain network.

In another embodiment of the present application, the authentication data processing device further includes an establishment unit 804, where:
the establishment unit 804 is configured to establish a mapping relationship between identity identifiers of the users and identity information of the users; and store the identity information of the user to an identity information database according to the mapping relationship.

In another embodiment of the present application, the receiving unit 801 authenticating the identity information includes:
verifying whether the identity information is valid; and
the processing unit 802 generating first authentication data according to the authentication result includes:
   when the verification result indicates that the identity information is valid, obtaining the first authentication data according to the authentication result, the institution identifier of the institution that generates the authentication result, and the identity identifier of the user.

In another embodiment of the present application, the authentication data processing device further includes a determining unit 805, where:
the receiving unit 801 is configured to receive a loss report or unregistration request sent from the user, where the loss report or unregistration request includes the identity identifier of the user;
the determining unit 805 is configured to determine according to the loss report or unregistration request that the identity information of the user is in an abnormal state;
the processing unit 802 is configured to generate second authentication data according to the identity information of the user being in an abnormal state, the institution identifier of the institution that generates the authentication result, and the identity identifier of the user; and
the storage unit 803 is configured to store the second authentication data to a blockchain node of the blockchain network.

It should be noted that the authentication data processing device provided in the embodiments of the present application may be implemented through software or hardware, which is not particularly limited herein.

Based on the same concept of the invention, the embodiments of the present application further provide a blockchain-based authentication data processing device, including at least one memory and at least one processor, where the at least one memory stores a program and the device is configured to execute the following steps by the at least one processor:
receiving identity information sent from a user, and authenticating the identity information;
generating first authentication data according to the authentication result, where the first authentication data includes the authentication result, an institution identifier of an institution that generates the authentication result, and an identity identifier of the user; and
storing the first authentication data to a blockchain node of a blockchain network.

For specific implementations, reference can be made to the contents described in the foregoing embodiments, and the details will not be repeatedly described herein.

In the 1990s, an improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program improved method procedures into hardware circuits to obtain corresponding hardware circuit structures. Therefore, it is improper to assume that the improvement of a method procedure cannot be implemented by using a hardware entity module. For example, a Programmable Logic Device (PLD) (for example, a Field Programmable Gate Array (FPGA)) is such an integrated circuit whose logic functions are determined by devices programmed by a user. Designers program by themselves to "integrate" a digital system into a piece of PLD, without the need to ask a chip manufacturer to design and manufacture a dedicated integrated circuit chip. Moreover, at present, the programming is mostly implemented by using logic compiler software, instead of manually manufacturing an integrated circuit chip. The logic compiler software is similar to a software complier used for developing and writing a program, and original codes before compiling also need to be written by using a specific programming language, which is referred to as a Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL), among which Very-High-Speed Integrated Circuit Hardware Description Language (VHDL) and Verilog are most commonly used now. Those skilled in the art also should know that a hardware circuit for implementing a logic method procedure may be easily obtained by slightly logically programming the method procedure using the above several hardware description languages and programming the method procedure into an integrated circuit.

A controller may be implemented in any suitable manner. For example, the controller may be in the form of, for example, a microprocessor or a processor and a computer readable medium storing a computer readable program code (for example, software or firmware) executable by the (micro)processor, a logic gate, a switch, an Application Specific Integrated Circuit (ASIC), a programmable logic controller, and an embedded micro-controller. Examples of the controller include, but are not limited to, the following micro-controllers: ARC 625D, Atmel AT91 SAM, Microchip PIC18F26K20, and Silicone Labs C8051F320. A memory controller may also be implemented as a part of control logic of a memory. Those skilled in the art also know that the controller may be implemented by using pure computer readable program codes, and in addition, the method steps may be logically programmed to enable the controller to implement the same function in a form of a logic gate, a switch, an application-specific integrated circuit, a programmable logic controller and an embedded microcontroller. Therefore, this type of controller may be considered as a hardware component, and apparatuses included therein for implementing various functions may also be considered as structures inside the hardware component. Or, the apparatuses used for implementing various functions may even be considered as both software modules for implementing the method and structures inside the hardware component.

The system, apparatus, module or unit illustrated in the above embodiments may be specifically implemented by using a computer chip or an entity, or a product having a certain function. A typical implementation device is a computer. Specifically, the computer can be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, when the apparatus is described, it is divided into various units in terms of functions for respective descriptions. Of course, when the present application is implemented, functions of the units may be implemented in the same or multiple pieces of software and/or hardware.

As will be appreciated by those skilled in the art, the embodiments of the present invention may be embodied as a method, a system, or a computer program product. Accordingly, the present invention may use the form of an entirely hardware embodiment, an entirely software embodiment or an embodiment combining software and hardware aspects. Furthermore, the present invention may use the form of a computer program product implemented on one or more computer-usable storage media (including but not limited to magnetic disk memories, CD-ROMs, optical memories, etc.) including computer-usable program codes.

The present invention is described with reference to flowcharts and/or block diagrams of the method, device (system) and computer program product in the embodiments of the present invention. It should be understood that computer program instructions can implement each process and/or block in the flowcharts and/or block diagrams and a combination of processes and/or blocks in the flowcharts and/or block diagrams. These computer program instructions may be provided to a general-purpose computer, a special-purpose computer, an embedded processor or a processor of another programmable data processing device to generate a machine, so that an apparatus configured to implement functions specified in one or more processes in the flowcharts and/or one or more blocks in the block diagrams is generated by using instructions executed by the computer or the processor of another programmable data processing device.

These computer program instructions may also be stored in a computer readable memory that can guide a computer or another programmable data processing device to work in a specified manner, so that the instructions stored in the computer readable memory generate a product including an instruction apparatus, where the instruction apparatus implements functions specified in one or more processes in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more processes in the flowcharts and/or one or more blocks in the block diagrams.

In a typical configuration, a computation device includes one or more central processing units (CPUs), input/output interfaces, network interfaces, and memories.

The memory may include the following forms of a computer readable medium: a volatile memory, a random access memory (RAM) and/or a non-volatile memory, for example, a read-only memory (ROM) or flash RAM. The memory is an example of the computer readable medium.

The computer readable medium includes volatile and non-volatile, mobile and non-mobile media, and can use any method or technology to store information. The information may be a computer readable instruction, a data structure, a module of a program or other data. Examples of storage media of the computer include, but are not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storage, a cassette tape, a tape disk storage or other magnetic storage devices, or any other non-transmission media, which can be used for storing computer accessible information. According to the definition herein, the computer readable medium does not include transitory computer readable media (transitory media), for example, a modulated data signal and carrier.

It should be further noted that the terms "include," "comprise" or other variations thereof are intended to cover non-exclusive inclusion, so that a process, method, product or device including a series of elements not only includes the elements, but also includes other elements not clearly listed, or further includes inherent elements of the process, method, product or device. In the absence of more limitations, an element defined by "including a/an..." does not exclude that the process, method, product or device including the element further has other identical elements.

The present application may be described in a common context of a computer executable instruction executed by a computer, for example, a program module. Generally, the program module includes a routine, a program, an object, an assembly, a data structure, and the like used for executing a specific task or implementing a specific abstract data type. The present application may also be implemented in distributed computing environments, and in the distributed computer environments, a task is executed by using remote processing devices connected through a communications network. In the distributed computer environment, the program module may be located in local and remote computer storage media including a storage device.

The embodiments in the specification are described progressively, identical or similar parts of the embodiments may be obtained with reference to each other, and each embodiment emphasizes a part different from other embodiments. Especially, the system embodiment is basically similar to the method embodiment, so it is described simply, and for related parts, reference may be made to the descriptions of the parts in the method embodiment.

The above description is merely embodiments of the present application and is not intended to limit the present application. The invention is defined by the appended claims.

## Claims

1. An authentication method for authenticating a user identity at a server, comprising:
receiving an authentication request sent from user equipment of a user, wherein the authentication request comprises an identity identifier of the user;
acquiring first authentication data associated with the identity identifier from a blockchain network, wherein a blockchain node of the blockchain network stores identity identifiers, respective authentication data of the identity identifiers, and a mapping relationship between the identity identifiers and the respective authentication data, the respective authentication data stored on the blockchain node including at least one authentication result indicating successful or failed authentication, and the first authentication data including an authentication result indicating successful or failed authentication; and
performing identity authentication, at the server, on the user according to the first authentication data acquired from the blockchain network.

2. The authentication method according to claim 1, wherein the method further comprises:
if the authentication request further comprises a public key and a digital signature, verifying whether the digital signature is valid by using the public key, wherein the digital signature is obtained by signing with a private key in the public and private key pair; and
acquiring the first authentication data associated with the identity identifier from the blockchain network comprises:
if the verification result indicates that the digital signature is valid, acquiring the first authentication data associated with the identity identifier from the blockchain network.

3. The authentication method according to claim 1 or 2, wherein acquiring the first authentication data associated with the identity identifier from the blockchain network comprises:
obtaining authentication data comprising the identity identifier from the blockchain network, and determining the obtained authentication data as the first authentication data associated with the identity identifier.

4. The authentication method according to claim 3, wherein the method further comprises:
if more than one piece of authentication data is obtained, determining authentication data satisfying a preset condition in the obtained authentication data, and determining the determined authentication data as the first authentication data associated with the identity identifier.

5. The authentication method according to claim 4, wherein the preset condition comprises at least one or more of the following:
a generation time of the determined authentication data satisfies a preset time condition;
an institution identifier comprised in the determined authentication data satisfies a preset issuing institution's institution identifier; and
a service type comprised in the determined authentication data is the same as a service type of a service initiated by the user.

6. The authentication method according to claim 1 or 5, wherein performing the identity authentication on the user according to the first authentication data comprises:
determining a current authentication state of the identity identifier according to the first authentication data; and
if the identity identifier is in an abnormal state and/or an authentication failed state, determining that the identity authentication on the user is not successful; otherwise, determining that the identity authentication on the user is successful.

7. The authentication method according to claim 6, wherein the method further comprises:
generating the first authentication data according to the authentication result, wherein the first authentication data comprises the identity identifier of the user, an institution identifier of an institution that generates the authentication result, and the authentication result, and the authentication result comprises authentication being successful/authentication being failed; and
storing the first authentication data to the blockchain node of the blockchain network.

8. The authentication method according to claim 7, wherein before storing the first authentication data to the blockchain node of the blockchain network, the method further comprises:
sending the first authentication data to the blockchain network, so that the blockchain network performs consensus processing on the first authentication data; and
storing the first authentication data to the blockchain node of the blockchain network comprises:
if the consensus processing result indicates that a consensus is reached, storing the first authentication data to the blockchain node of the blockchain network.

9. The authentication method according to claim 6, wherein after determining that the identity authentication on the user is successful, the method further comprises:
acquiring, according to the service type of the service initiated by the user, identity feature information of the user associated with the service type from an identity information management server;
generating second authentication data according to an authentication result and the identity feature information, wherein the second authentication data comprises the identity identifier of the user, an institution identifier of an institution that generates the authentication result, an authentication event of authenticating the identity feature information, and the authentication result, and the authentication result comprises authentication being successful/authentication being failed; and
storing the second authentication data to the blockchain node of the blockchain network.

10. An authentication device, comprising at least one memory and at least one processor, wherein the at least one memory stores a program, which when executed by the at least one processor, configures the device to carry out the method of any one of claims 1 to 9.

## Patentansprüche

1. Authentifizierungsverfahren zum Authentifizieren einer Benutzeridentität bei einem Server, Folgendes umfassend:
Empfangen einer Authentifizierungsanforderung, die von einem Benutzergerät eines Benutzers gesendet wird, wobei die Authentifizierungsanforderung eine Identitätskennung des Benutzers umfasst;
Erfassen erster Authentifizierungsdaten, die der Identitätskennung zugeordnet sind, von einem Blockchain-Netzwerk, wobei ein Blockchain-Knoten des Blockchain-Netzwerks Identitätskennungen, jeweilige Authentifizierungsdaten der Identitätskennungen und eine Zuordnungsbeziehung zwischen den Identitätskennungen und den jeweiligen Authentifizierungsdaten speichert, wobei die jeweiligen Authentifizierungsdaten, die auf dem Blockchain-Knoten gespeichert sind, mindestens ein Authentifizierungsergebnis beinhalten, das eine erfolgreiche oder fehlgeschlagene Authentifizierung angibt, und die ersten Authentifizierungsdaten ein Authentifizierungsergebnis beinhalten, das eine erfolgreiche oder fehlgeschlagene Authentifizierung angibt; und
Durchführen einer Identitätsauthentifizierung an dem Server für den Benutzer gemäß den ersten Authentifizierungsdaten, die aus dem Blockchain-Netzwerk erfasst werden.

2. Authentifizierungsverfahren nach Anspruch 1, wobei das Verfahren ferner Folgendes umfasst:
wenn die Authentifizierungsanforderung ferner einen öffentlichen Schlüssel und eine digitale Signatur umfasst, Verifizieren, ob die digitale Signatur gültig ist, indem der öffentliche Schlüssel verwendet wird, wobei die digitale Signatur durch Signieren mit einem privaten Schlüssel in dem Paar aus öffentlichem und privatem Schlüssel erhalten wird; und wobei das Erfassen der ersten Authentifizierungsdaten, die der Identitätskennung zugeordnet sind, aus dem Blockchain-Netzwerk Folgendes umfasst:
wenn das Verifizierungsergebnis angibt, dass die digitale Signatur gültig ist, Erfassen der ersten Authentifizierungsdaten, die der Identitätskennung zugeordnet sind, aus dem Blockchain-Netzwerk.

3. Authentifizierungsverfahren nach Anspruch 1 oder 2, wobei das Erfassen der ersten Authentifizierungsdaten, die der Identitätskennung zugeordnet sind, aus dem Blockchain-Netzwerk Folgendes umfasst:
Erhalten von Authentifizierungsdaten, welche die Identitätskennung umfassen, aus dem Blockchain-Netzwerk, und Bestimmen der erhaltenen Authentifizierungsdaten als die ersten Authentifizierungsdaten, die der Identitätskennung zugeordnet sind.

4. Authentifizierungsverfahren nach Anspruch 3, wobei das Verfahren ferner Folgendes umfasst:
wenn mehr als ein Authentifizierungsdatenelement erhalten wird, Bestimmen von Authentifizierungsdaten, die eine voreingestellte Bedingung in den erhaltenen Authentifizierungsdaten erfüllen, und Bestimmen der bestimmten Authentifizierungsdaten als die ersten Authentifizierungsdaten, die der Identitätskennung zugeordnet sind.

5. Authentifizierungsverfahren nach Anspruch 4, wobei die voreingestellte Bedingung mindestens eines oder mehrere der Folgenden umfasst:
eine Generierungszeit der bestimmten Authentifizierungsdaten erfüllt eine voreingestellte Zeitbedingung;
eine Institutionskennung, die in den bestimmten Authentifizierungsdaten enthalten ist, erfüllt die Institutionskennung einer voreingestellten ausstellenden Institution; und
ein Diensttyp, der in den bestimmten Authentifizierungsdaten enthalten ist, ist derselbe wie ein Diensttyp eines durch den Benutzer initiierten Dienstes.

6. Authentifizierungsverfahren nach Anspruch 1 oder 5, wobei das Durchführen der Identitätsauthentifizierung bei dem Benutzer gemäß den ersten Authentifizierungsdaten Folgendes umfasst:
Bestimmen eines aktuellen Authentifizierungszustands der Identitätskennung gemäß den ersten Authentifizierungsdaten; und wenn sich die Identitätskennung in einem anormalen Zustand und/oder einem Authentifizierungsfehlerzustand befindet, Bestimmen, dass die Identitätsauthentifizierung bei dem Benutzer nicht erfolgreich ist; andernfalls Bestimmen, dass die Identitätsauthentifizierung bei dem Benutzer erfolgreich ist.

7. Authentifizierungsverfahren nach Anspruch 6, wobei das Verfahren ferner Folgendes umfasst:
Erzeugen der ersten Authentifizierungsdaten gemäß dem Authentifizierungsergebnis, wobei die ersten Authentifizierungsdaten die Identitätskennung des Benutzers, eine Institutionskennung einer Institution, die das Authentifizierungsergebnis erzeugt, und das Authentifizierungsergebnis umfassen, und wobei das Authentifizierungsergebnis umfasst, dass eine Authentifizierung erfolgreich war/fehlgeschlagen hat; und
Speichern der ersten Authentifizierungsdaten in dem Blockchain-Knoten des Blockchain-Netzwerks.

8. Authentifizierungsverfahren nach Anspruch 7, wobei das Verfahren vor dem Speichern der ersten Authentifizierungsdaten in dem Blockchain-Knoten des Blockchain-Netzwerks ferner Folgendes umfasst:
Senden der ersten Authentifizierungsdaten an das Blockchain-Netzwerk, sodass das Blockchain-Netzwerk eine Konsensverarbeitung an den ersten Authentifizierungsdaten durchführt; und
wobei das Speichern der ersten Authentifizierungsdaten in dem Blockchain-Knoten des Blockchain-Netzwerks Folgendes umfasst:
wenn das Konsensverarbeitungsergebnis angibt, dass ein Konsens erreicht ist, Speichern der ersten Authentifizierungsdaten in dem Blockchain-Knoten des Blockchain-Netzwerks.

9. Authentifizierungsverfahren nach Anspruch 6, wobei nach dem Bestimmen, dass die Identitätsauthentifizierung des Benutzers erfolgreich ist, das Verfahren ferner Folgendes umfasst:
Erfassen, gemäß dem Diensttyp des von dem Benutzer initiierten Dienstes, von Identitätsmerkmalsinformationen des Benutzers, die dem Diensttyp zugeordnet sind, von einem Identitätsinformationsverwaltungsserver;
Erzeugen von zweiten Authentifizierungsdaten gemäß einem Authentifizierungsergebnis und den Identitätsmerkmalsinformationen, wobei die zweiten Authentifizierungsdaten die Identitätskennung des Benutzers, eine Institutionskennung einer Institution, die das Authentifizierungsergebnis erzeugt, ein Authentifizierungsereignis zum Authentifizieren der Identitätsmerkmalsinformationen und das Authentifizierungsergebnis umfassen, und wobei das Authentifizierungsergebnis umfasst, dass die Authentifizierung erfolgreich war/die Authentifizierung fehlgeschlagen ist; und Speichern der zweiten Authentifizierungsdaten in dem Blockchain-Knoten des Blockchain-Netzwerks.

10. Authentifizierungsvorrichtung, umfassend mindestens einen Speicher und mindestens einen Prozessor, wobei der mindestens eine Speicher ein Programm speichert, das bei Ausführung durch mindestens einen Prozessor die Vorrichtung dazu konfiguriert, das Verfahren nach einem der Ansprüche 1 bis 9 auszuführen.

## Revendications

1. Procédé d'authentification pour authentifier une identité d'utilisateur sur un serveur, comprenant :
la réception d'une demande d'authentification envoyée par l'équipement utilisateur d'un utilisateur, dans lequel la demande d'authentification comprend un identifiant d'identité de l'utilisateur ;
l'acquisition de premières données d'authentification associées à l'identifiant d'identité à partir d'un réseau de chaîne de blocs, dans lequel un noeud de chaîne de blocs du réseau de chaîne de blocs stocke des identifiants d'identité, des données d'authentification respectives des identifiants d'identité, et une relation de mappage entre les identifiants d'identité et les données d'authentification respectives, les données d'authentification stockées sur le noeud de chaîne de blocs comportant au moins un résultat d'authentification indiquant une authentification réussie ou échouée, et les premières données d'authentification comportant un résultat d'authentification indiquant une authentification réussie ou échouée ; et
le fait d'effectuer une authentification d'identité, au niveau du serveur, sur l'utilisateur selon les premières données d'authentification acquises du réseau de chaîne de blocs.

2. Procédé d'authentification selon la revendication 1, dans lequel le procédé comprend en outre :
si la demande d'authentification comprend en outre une clé publique et une signature numérique, le fait de vérifier si la signature numérique est valide en utilisant la clé publique, dans lequel la signature numérique est obtenue en signant avec une clé privée dans la paire de clés publique et privée ; et
l'acquisition des premières données d'authentification associées à l'identifiant d'identité auprès du réseau de chaîne de blocs comprend :
si le résultat de la vérification indique que la signature numérique est valide, l'acquisition des premières données d'authentification associées à l'identifiant d'identité auprès du réseau de chaîne de blocs.

3. Procédé d'authentification selon la revendication 1 ou 2, dans lequel l'acquisition des premières données d'authentification associées à l'identifiant d'identité auprès du réseau de chaîne de blocs comprend :
l'obtention de données d'authentification comprenant l'identifiant d'identité à partir du réseau de chaîne de blocs, et la détermination des données d'authentification obtenues en tant que premières données d'authentification associées à l'identifiant d'identité.

4. Procédé d'authentification selon la revendication 3, dans lequel le procédé comprend en outre :
si plus d'un élément de données d'authentification est obtenu, la détermination de données d'authentification satisfaisant une condition prédéfinie dans les données d'authentification obtenues, et la détermination des données d'authentification déterminées en tant que premières données d'authentification associées à l'identifiant d'identité.

5. Procédé d'authentification selon la revendication 4, dans lequel la condition prédéfinie comprend au moins un ou plusieurs des éléments suivants :
un temps de génération des données d'authentification déterminées satisfait une condition temporelle prédéfinie ;
un identifiant d'institution compris dans les données d'authentification déterminées satisfait un identifiant d'institution de l'institution émettrice prédéfini ; et
un type de service compris dans les données d'authentification déterminées est le même qu'un type de service d'un service lancé par l'utilisateur.

6. Procédé d'authentification selon la revendication 1 ou 5, dans lequel la réalisation de l'authentification d'identité sur l'utilisateur selon les premières données d'authentification comprend :
la détermination d'un état d'authentification actuel de l'identifiant d'identité selon les premières données d'authentification ; et
si l'identifiant d'identité est dans un état anormal et/ou un état d'échec d'authentification, la détermination que l'authentification d'identité sur l'utilisateur n'a pas réussi ; sinon, la détermination que l'authentification d'identité sur l'utilisateur est réussie.

7. Procédé d'authentification selon la revendication 6, dans lequel le procédé comprend en outre :
la génération des premières données d'authentification selon le résultat d'authentification, dans lequel les premières données d'authentification comprennent l'identifiant d'identité de l'utilisateur, un identifiant d'institution d'une institution qui génère le résultat d'authentification, et le résultat d'authentification, et le résultat d'authentification comprend le succès de l'authentification/l'échec de l'authentification ; et
le stockage des premières données d'authentification dans le noeud de chaîne de blocs du réseau de chaîne de blocs.

8. Procédé d'authentification selon la revendication 7, dans lequel avant le stockage des premières données d'authentification au noeud de chaîne de blocs du réseau de chaîne de blocs, le procédé comprend en outre :
l'envoi des premières données d'authentification au réseau de chaîne de blocs, de sorte que le réseau de chaîne de blocs effectue un traitement de consensus sur les premières données d'authentification ; et
le stockage des premières données d'authentification dans le noeud de chaîne de blocs du réseau de chaîne de blocs comprend : si le résultat du traitement de consensus indique qu'un consensus est atteint, le stockage des premières données d'authentification dans le noeud de chaîne de blocs du réseau de chaîne de blocs.

9. Procédé d'authentification selon la revendication 6, dans lequel après la détermination que l'authentification d'identité sur l'utilisateur est réussie, le procédé comprend en outre :
l'acquisition, selon le type de service du service lancé par l'utilisateur, des informations de caractéristique d'identité de l'utilisateur associées au type de service à partir d'un serveur de gestion d'informations d'identité ;
la génération de secondes données d'authentification selon un résultat d'authentification et les informations de caractéristique d'identité, dans lequel les secondes données d'authentification comprennent l'identifiant d'identité de l'utilisateur, un identifiant d'institution d'une institution qui génère le résultat d'authentification, un événement d'authentification d'authentification des informations de caractéristique d'identité, et le résultat d'authentification, et le résultat d'authentification comprend le succès de l'authentification/l'échec de l'authentification ; et
le stockage des secondes données d'authentification dans le noeud de chaîne de blocs du réseau de chaîne de blocs.

10. Dispositif d'authentification, comprenant au moins une mémoire et au moins un processeur, dans lequel l'au moins une mémoire stocke un programme qui, lorsqu'il est exécuté par l'au moins un processeur, configure le dispositif pour mettre en oeuvre le procédé selon l'une quelconque des revendications 1 à 9.
